Europäisches Patentamt

European Patent Office

Office européen des brevets

(11) Publication number: **0 384 154**
**A2**

## EUROPEAN PATENT APPLICATION

(21) Application number: 90101568.5

(22) Date of filing: 26.01.90

(51) Int. Cl.5: **C08L 67/02**, //(C08L67/02, 51:04)

(30) Priority: 24.02.89 NL 8900460

(43) Date of publication of application:
29.08.90 Bulletin 90/35

(84) Designated Contracting States:
DE ES FR GB IT NL

(71) Applicant: **GENERAL ELECTRIC COMPANY**
**1 River Road**
**Schenectady, N.Y. 12151(US)**

(72) Inventor: **De Boer, Jan**
**General Electric Plastics B.V., P.O. Box 117**
**NL-4600 AC Bergen op Zoom(NL)**
Inventor: **Tabankia, Farshid**
**General Electric Plastics B.V., P.O. Box 117**
**NL-4600 AC Bergen op Zoom(NL)**

(74) Representative: **Schüler, Horst, Dr. et al**
**General Electric Praunheimer Landstrasse**
**50**
**D-6000 Frankfurt 90(DE)**

(54) Article manufactured by melt extrusion of a thermoplastic resin composition; thermoplastic resin composition.

(57) The invention relates to an article manufactured by extrusion from a thermoplastic resin composition. The resin composition comprises a polybutylene terephthalate resin and a special type of alkylmethacrylate - butadiene - styrene interpolymer.
The melt strength of the polybutylene terephthalate resin is considerably improved by the addition of the interpolymer. As a result of the improved melt strength it is possible to obtain extruded articles, like tubes, having a small wall thickness.

## Article manufactured by melt extrusion of a thermoplastic resin composition; thermoplastic resin composition.

The invention relates to an article manufactured by melt extrusion of a thermoplastic resin composition, which comprises a polybutylene terephthalate resin and an alkylmethacrylate - butadiene - styrene interpolymer.

The invention further relates to thermoplastic resin composition comprising a polybutylene terephthalate resin and an alkylmethacrylate - butadiene -styrene interpolymer

EP-A-0 185 103 describes polymers compositions comprising a polyester, like polybutylene terephthalate and a butadiene based core-shell interpolymer. Said known compositions generally comprise 35 to 85 parts by weight of the interpolymer and 15 to 55 parts by weight of the polyester. The known compositions can be processed by re-extrusion or injection molding into shaped articles.

In processing polybutylene terephthalate resins by means of extrusion (more accurately said by means of melt extrusion) other problems occur than in injection moulding. In melt extrusion the melt strength is of importance: when this is unsatisfactory it is not possible to manufacture shaped articles, for example, tubes, by melt extrusion. When thin-walled articles, for example, having a wall thickness of 0.5 millimetre or less, or even 0.3 millimetre or less, are to be manufactured by means of melt extrusion, this is not very readily possible due to too low a melt strength of most of the polymer compositions which comprise a polybutylene terephthalate resin.

The invention is based on the discovery that compositions of synthetic resins which comprise a special type of interpolymer in addition to the polybutylene terephthalate resin are more suitable for melt extrusion.

The invention is characterised in that article has a wall thickness of less than 0.5mm and in that the interpolymer is a graft copolymer obtained by grafting upon a butadiene based backbone a monomer mixture of styrene and an alkylmethacrylate wherein the grafted monomers do not form a closed shell around the butadiene based backbone.

The thermoplastic resin composition according to the invention is characterized in that the interpolymer is a graft copolymer obtained by grafting upon a butadiene based backbone a monomer mixture of styrene and an alkylmethacrylate wherein the grafted monomers do not form a closed shell around the butadiene based backbone.

The composition of the synthetic resin composition from which the article is manufactured is preferably such that it comprises 25-35 parts by weight of the interpolymer per 100 parts by weight of polybutylene terephthalate plus interpolymer.

A polybutylene terephthalate resin having an intrinsic viscosity of at least 1.20 dl/g measured at 25°C in a phenol/1,1,2,2 tetrachloroethane mixture is preferably used in the invention.

The polybutylene terephthalate resin as used in the invention is preferably built up for more than 80 mol% of units derived from butanediol and terephthalic acid.

It is possible to use non-linear polybutylene terephthalates in the invention. Such non-linear, i.e. branched, polybutylene terephthalates comprise a comparatively small quantity of units derived from a trihydroxy compound or a tetrahydroxy compound and/or units derived from a tricarboxylic acid or a tetracarboxylic acid.

The interpolymers derived from methylmethacrylate are preferably used as alkylmethacrylate - butadiene - styrene terpolymers.

The thermoplastic resin composition from which the tube according to the invention is manufactured by extrusion may comprise one or more conventionally used additives, for example, stabilisers, antioxidants, lubricating agents, dyes and pigments, and the like. For the choice of the additives and the determination of the quantities to be used it should be ensured that the melt strength of the thermoplastic resin composition is not detrimentally influenced.

The invention relates in particular to articles such as tubes having a wall thickness of 0.5 millimetres or less. Such tubes are supple and slightly recoil when they are squeezed. As a result of this they are suitable, for example, to manufacture therefrom holders for paste-like products, for example, tooth paste.

As indicated hereinbefore, the article according to the invention is manufactured by melt extrusion of the thermoplastic resin composition described hereinbefore. The manufacture of articles like tubes by means of melt extrusion of resin compositions is generally known. In principle the thermoplastic resin composition is heated to a temperature above the melting temperature and in this form is forced through a die. The resulting moulded article in many processes is drawn away from the die in a still slightly soft condition. It is of the utmost importance for the article which is not yet cooled entirely to have a sufficient rigidity. In order to obtain a sufficient rigidity the melt strength of the article with a given diameter and wall thickness is of importance. A good measure of the melt strength is the viscosity of the melt at low shear rates measured at a temperature of approximately the processing temperature.

The thermoplastic resin composition from which the tube according to the invention has been obtained by extrusion has a good melt strength. The thermoplastic resin composition comprises at any rate the following constituents:

A. a polybutylene terephthalate resin and

B. an alkylmethacrylate - butadiene - styrene interpolymer, as herein above defined.

## A. Polybutylene terephthalate resin

Polybutylene terephthalate resins are generally known polymers. In principle, any known polymer is to be considered.

Polybutylene terephthalate resins which are built up for at least 80 mol% from units derived from butanediol and terephthalic acid are preferably used. The polybutylene terephthalate resin preferably comprises a branching agent. Tri- or tetra-hydroxy compounds, three-fold or four-fold carboxylic acids may be used as branching agents.

## B. Alkylmethacrylate - butadiene - styrene interpolymers

These terpolymers are generally known. According to the invention the thermoplastic resin composition comprises as an interpolymer a graft copolymer obtained by grafting upon a butadiene based backbone a monomer mixture of styrene and an alkylmethacrylate wherein the grafted monomers do not form a closed shell around the butadiene based backbone.

In the interpolymer the butadiene based backbone constitutes by preference 50-59 procent by weight of the interpolymer.

Said interpolymers differ from the interpolymers described in EP-A-0 185 103 in that the grafting monomers do not form a closed shell around the butadiene based backbone. Such structures can be obtained by varying the manufacturing conditions of the interpolymers eq by using different amounts of crosslinking agents in the backbone, by using different ratio's in the monomer mixture, by using a different particle size of the butadiene based latex upon which the monomer mixture is grafted and so on.

A suitable interpolymer can be obtained from Rohm and Haas under the designation BTA-736.

The invention will now be described in greater detail with reference to the ensuing specific examples.

## Examples I; comparative examples A and B

In these examples, various polymer mixtures were prepared starting from the following constituents:

PBT: a polybutylene terephthalate resin having an intrinsic viscosity of 1.2 dl/g at 25°C, measured in a phenol/1,1,2,2, tetrachloroethane mixture.

MBS-1: a commercially available methylmethacrylate -butadiene - styrene interpolymer, with a core-shell structure having a closed shell around the butadiene backbone and with a rubber content of 77% by weight (ACRYLOID® KM653 of Rohm and Haas)

MBS-2: a methylmethacrylate - butadiene - styrene interpolymer with a butadiene content of about 55% by weight and not having a closed shell structure (available from Rohm and Haas under the designation BTA-736)

Stab: a thermal stabiliser based on a phenolic anti-oxidant.

The said constituents were compounded in an extruder in the quantities stated hereinafter in the table and were then processed to pellets. The melt viscosity of the resulting pellets was determined at 250°C at different shear rates according to DIN 54811.

The found results are also recorded in the table.

| Example No. | A | B | I |
|---|---|---|---|
| Composition (parts by weight) | | | |
| PBT | 99.7 | 69.7 | 69.7 |
| MBS-1 | - | 30 | - |
| MBS-2 | - | - | 30 |
| Stab. | 0.3 | 0.3 | 0.3 |
| Melt viscosity at shear rate: | | | |
| 115 per second | 650 | 657 | 1415 |
| 230 per second | 580 | 514 | 1030 |
| 574 per second | 450 | 348 | 649 |

It was tried to extrude a thin-walled (0.5 mm) tube from polymer mixture A and B. This was impossible as a result of the low melt viscosity.

Tubes having a wall thickness of less than 0.5 mm i.e. of 0.3 mm could be extruded from polymer mixture I according to the invention.

## Claims

1. An article manufactured by melt extrusion of a thermoplastic resin composition which comprises a polybutylene terephthalate resin and an alkylmethacrylate -butadiene - styrene interpolymer, characterised in that the article has a wall thickness of less than 0.5 mm and in that the interpolymer is a graft copolymer obtained by grafting upon a butadiene based backbone a monomer mixture of styrene and an alkylmethacrylate wherein the grafted monomers do not form a closed shell around the butadiene based backbone.

2. An article according to claim 1, characterised in that the butadiene based backbone constitutes 50-59 percent by weight of the interpolymer.

3. An article according to claim 1, characterised in that the thermoplastic resin composition comprises 25-35 parts by weight of the interpolymer per 100 parts by weight of the polybutylene terephthalate resin plus the interpolymer.

4. An article as claimed in Claim 1, characterised in that it is manufactured by extrusion from a synthetic resin composition which comprises a polybutylene terephthalate resin which is built up for more than 80 mol% from units derived from butanediol and terephthalic acid.

5. An article as claimed in Claim 1, characterised in that it is manufactured by extrusion from a synthetic resin composition which comprises a polybutylene terephthalate resin having units derived from a tri- or tetrahydroxy compound.

6. An article as claimed in Claim 1, characterised in that it is manufactured by extrusion from a synthetic resin composition which comprises a polybutylene terephthalate resin having units derived from a tri- or tetracarboxylic acid.

7. An article as claimed in Claim 1, characterised in that it is manufactured by extrusion from a thermoplastic resin composition which comprises one or more conventionally used additives in addition to polybutylene terephthalate resin and the interpolymer.

8. An article as claimed in Claim 7, characterised in that the tube is manufactured by extrusion from a thermoplastic resin composition which comprises a thermal stabiliser.

9. Thermoplastic resin composition comprising a polybutylene terephthalate resin and an alkylmethacrylate - butadiene - styrene interpolymer characterised in that the interpolymer is a graft copolymer obtained by grafting upon a butadiene based backbone a monomer mixture of styrene and an alkylmethacrylate wherein the grafted monomers do not form a closed shell around the butadiene based backbone.

10. Thermoplastic resin composition characterised in that the butadiene based backbone constitutes 50-59 procent by weight of the interpolymer.

4

11. Thermoplastic resin composition characterised in that it comprises 25-35 parts by weight of the interpolymer per 100 parts by weight of the polybutylene terephthalate resin plus the interpolymer.

12. Thermoplastic resin composition characterised in that it comprises a polybutylene terephthalate resin which is built up for more than 80 mol% from units derived from butanediol and terephthalic acid.

13. Thermoplastic resin composition characterised in that it comprises a polybutylene terephthalate resin having units derived from a tri- or tetrahydroxy compound.

14. Thermoplastic resin composition characterised in that it comprises a polybutylene terephthalate resin having units derived from a tri- or tetracarboxylic acid.

15. Thermoplastic resin compositions caracterised in that it comprises one or more conventionally used additives in addition to the polybutylene terephthalate resin and the interpolymer.